# EUROPÄISCHE PATENTSCHRIFT

(11) **EP 4 204 909 B1**
(45) Veröffentlichungstag und Bekanntmachung des Hinweises auf die Patenterteilung: **17.07.2024**
(21) Anmeldenummer: 21816008.3
(22) Anmeldetag: 18.11.2021
(51) Int. Cl.: H04L 45/28, H04L 12/437, G05B 19/042, H04L 12/40

(54) **EDGE-GERÄT SOWIE VERFAHREN UND SOFTWARE ZUR BEREITSTELLUNG VON REDUNDANZFUNKTIONEN AUF EINEM EDGE-GERÄT**
EDGE DEVICE, METHOD AND PROGRAM FOR PROVIDING REDUNDANCY FUNCTIONS ON AN EDGE DEVICE
DISPOSITIF PÉRIPHÉRIQUE, PROCÉDÉ ET LOGICIEL POUR FOURNIR DES FONCTIONS DE REDONDANCE SUR UN DISPOSITIF PÉRIPHÉRIQUE

(30) Priorität: 25.11.2020 EP 20209780
(43) Veröffentlichungstag der Anmeldung: 05.07.2023
(73) Patentinhaber: Siemens Aktiengesellschaft, 80333 München (DE)
(72) Erfinder: GOTTWALD, Sven, 90475 Nürnberg (DE)
(74) Vertreter: Siemens Patent Attorneys
(86) Internationale Anmeldenummer: PCT/EP2021/082149
(87) Internationale Veröffentlichungsnummer: WO 2022/112089

(56) Entgegenhaltungen:
- EP-A1- 2 784 988
- WO-A1-2016/097459
- US-B2- 9 407 582

## Beschreibung

Die Erfindung betrifft ein Edge-Gerät gemäß Patentanspruch 1, ein Verfahren zur Bereitstellung von Redundanzfunktionen auf einem Edge-Gerät gemäß Patentanspruch 12 sowie eine Anwendungs-Software gemäß Patentanspruch 13.

Üblicherweise umfasst ein industrielles Automatisierungssystem eine Vielzahl von industriellen Automatisierungsgeräten, die über ein industrielles Kommunikationsnetz miteinander vernetzt sind und im Rahmen einer Fertigungs- oder Prozessautomatisierung zur Steuerung oder Regelung von Anlagen, Maschinen bzw. Geräten dienen. Aufgrund zeitkritischer Rahmenbedingungen in technischen Systemen, die mittels industrieller Automatisierungsgeräte automatisiert sind, werden in industriellen Kommunikationsnetzen zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Äußerst problematisch sind Unterbrechungen von Kommunikationsverbindungen zwischen Rechnereinheiten eines industriellen Automatisierungssystems oder industriellen Automatisierungsgeräten, da dies zu einem Informationsverlust und somit zu einer Störung der Anlage, der Maschine oder des Gerätes führen kann. Außerdem kann es beispielsweise zu einer unerwünschten oder unnötigen Wiederholung einer Übermittlung einer Dienstanforderung führen. Hierdurch wird eine zusätzliche Auslastung von Kommunikationsverbindungen des industriellen Automatisierungssystems verursacht, was zu weiteren Systemstörungen oder -fehlern führen kann. Darüber hinaus können nicht oder nicht vollständig übermittelte Nachrichten beispielsweise einen Übergang oder Verbleib eines industriellen Automatisierungssystems in einen sicheren Betriebszustand verhindern. Im ungünstigsten Fall kann es zu einem Ausfall einer kompletten Produktionsanlage und zu einem kostspieligen Produktionsstillstand kommen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy, Parallel Redundancy Protocol oder (Rapid) Spanning Tree Protocol, für hochverfügbare, redundant betreibbare industrielle Kommunikationsnetze entwickelt worden.

Media Redundancy Protocol (MRP) ist im Standard IEC 62439-2 definiert und ermöglicht eine Kompensation einzelner Verbindungsausfälle in Netzen bei redundanter Übertragung von Nachrichten. Das Netz umfasst hierbei mehrere innerhalb einer Ringtopologie verbundene Kommunikationsgeräte, die jeweils zwei Anschlüsse für die Verbindung des Gerätes mit der Ringtopologie umfassen. Von den Kommunikationsgeräten ist ein Kommunikationsgerät als sogenannter "Ring-Redundanz-Manager" innerhalb der Ringtopologie eingerichtet. Die anderen Kommunikationsgeräte werden als "Ring-Clients" bezeichnet. Der Ring-Redundanz-Manager überwacht die Ringtopologie auf Unterbrechungen anhand versendeter Test-Nachrichten und steuert eine Weiterleitung von Nachrichten mit Nutzdaten zwischen seinen zwei Anschlüssen, wenn eine Unterbrechung detektiert wird.

High-availability Seamless Redundancy (HSR) und Parallel Redundancy Protocol (PRP) sind im Standard IEC 62439-3 definiert und ermöglichen eine stoßfreie redundante Übertragung von Nachrichten, insbesondere ohne Umschaltstöße bei Topologieänderungen. Entsprechend High-availability Seamless Redundancy und Parallel Redundancy Protocol wird jede Nachricht von einem sendenden Kommunikationsgerät dupliziert und auf zwei verschiedenen Wegen über ein Netzwerk zu einem Empfänger geschickt. Durch ein empfängerseitiges Kommunikationsgerät werden Duplikate darstellende redundante Nachrichten aus einem empfangenen Datenstrom ausgefiltert.

In einem redundanten HSR- oder PRP-Kommunikationsnetz kann eine Netzkomponente, die einen Zugriff auf das redundante Kommunikationsnetz bereitstellt, unterschiedliche Rollen annehmen. Eine HSR/PRP-fähige Netzkomponente in einfachster Form wird als Double Attached Node (DAN) bezeichnet. Eine Netzkomponente, die Datagramme zwischen Teilnehmern oder Endgeräten in einem HSR- oder PRP-Kommunikationsnetz einerseits und Endgeräten bzw. Netzsegmenten ohne HSR/PRP-Funktionalität andererseits vermittelt, wird als HSR/PRP-Proxy oder RedBox bezeichnet. Grundsätzlich kann eine Netzkomponente für einen Zugriff auf ein redundantes HSR- oder PRP-Kommunikationsnetz auch mehrere HSR-Ringe verbinden oder Kommunikation zwischen HSR- und PRP-Netzsegmenten umsetzen. In diesem Fall wird die Netzkomponente als HSR-HSR-Koppler oder QuadBox bzw. HSR-PRP-Koppler bezeichnet.

In den Netzkomponenten bzw. Kommunikationsgeräten sind die Redundanzfunktionen (z.B. MRP-Ring-Redundanz-Manager-Funktion, HSR-Duplikate-Filterfunktion) üblicherweise durch ein Field Programmable Gate Array (FPGA), siehe z.B. EP 2 838 220 A1, bzw. in einer Firmware implementiert. Sie sind somit eng mit der Hardware des Gerätes gekoppelt. Eine nachträgliche Änderung oder ein Nachrüsten derartiger Redundanzfunktionen in einem Gerät ist somit mit großem Aufwand verbunden oder überhaupt nicht möglich.

Die WO 2016/097459 A1 offenbart in FIG 4 eine PRP Transition Unit (z.B. eine RedBox) mit einem Kommunikationsanschluss zu einem ersten konventionellen Netzwerk (z.B. einem Office-Netzwerk einer Anlage, jedoch nicht direkt zum Internet), einem ersten PRP-Kommunikationsanschluss (Port) zu einem Layer 3 Switch eines ersten PRP-Netzwerkes und mit einem zweiten PRP-Kommunikationsanschluss zu einem Layer 3 Switch eines zweiten PRP-Netzwerkes. Die PRP Transition Unit stellt dabei Redundanzfunktionen des PRP-Redundanzprotokolles bereit. Genauere Details über den Aufbau der PRP Transition Unit sind nicht offenbart. Für die PRP Transition Unit wird beispielhaft auf den RSP Switch Hirschmann RSP 25 von Beiden Inc. verwiesen, bei dem eine Aktualisierung der Betriebssoftware über eine SD Card möglich ist (siehe Hirschmann, Anwender-Handbuch, Installation Industrial Ethernet Rail Switch Power, RSP20/25/30/35, Release 16, 12/2019, Seite 30).

Die EP 2 784 988 A1 offenbart in FIG 1 ein modulares Steuerungsgerät mit mehreren Anschlüssen für eine Feldbuskommunikationsverbindung zu Automatisierungsgeräten sowie mit Anschlüssen für ein industrielles Kommunikationsnetz, welches zwei Teilnetze umfasst. Über das industrielle Kommunikationsnetz kann das modulare Steuerungsgerät mit einem Leitsystem verbunden werden. Das modulare Steuerungsgerät umfasst ein Schnittstellenmodul mit einer Signalverarbeitungseinheit, die vorzugsweise mittels eine FPGA realisiert ist. Die Signalverarbeitungseinheit stellt dabei sowohl Redundanzfunktionen eines stoßbehafteten Redundanzprotokolles (z.B. MRP) als auch Redundanzfunktionen eines stoßfreien Redundanzprotokolles (z.B. HSR oder PRP) bereit, wobei selektiv zwischen diesen Protokollen umgeschaltet werden kann.

Die US 9,407,582 B2 offenbart ein Kommunikationsgerät mit einem Anschluss zu einem SCADA-System und mit Anschlüssen zu zwei redundanten PRP-Teilnetzen. Das Kommunikationsgerät umfasst eine Signalverarbeitungseinheit, die mittels eines FPGA realisiert ist. Die Signalverarbeitungseinheit stellt Redundanzfunktionen des PRP-Redundanzprotokolles für die PRP-Teilnetze bereit. Prinzipiell ist auch eine Kommunikation mittels des HSR-Redundanzprotokolles möglich.

Ausgehend hiervon ist es Aufgabe vorliegender Erfindung, ein Gerät anzugeben, das eine schnelle und aufwandsarme Möglichkeit zur Bereitstellung, Änderung oder Nachrüstung von Redundanzfunktionen für ein redundant betriebenes industrielles Kommunikationsnetz ermöglicht.

Die Lösung dieser Aufgabe gelingt durch ein Edge-Gerät gemäß Patentanspruch 1. Vorteilhafte Ausgestaltungen sind Gegenstand der Unteransprüche 2 bis 11. Ein Verfahren zur Bereitstellung von Redundanzfunktionen gemäß eines industriellen Redundanzprotokolls auf einem Edge-Gerät ist Gegenstand des Anspruchs 12. Eine Anwendungs-Software ist Gegenstand des Anspruchs 13.

Die Erfindung beruht auf der Erkenntnis, dass Edge-Geräte sehr vorteilhaft für eine flexible Bereitstellung von Redundanzfunktionen genutzt werden können. Industrielle Automatisierungssysteme bzw. industrielle Kommunikationsnetze werden üblicherweise in einem datentechnischen "Inselbetrieb", betrieben, d.h. als privates Netzwerk, welches von öffentlichen Netzwerken, insbesondere dem Internet, getrennt ist. Dies dient beispielsweise dazu, datentechnische Angriffe auf das Automatisierungssystem zu verhindern. Vermehrt wird jedoch ein großer Nutzen darin gesehen, Daten mit einem öffentlichen Netzwerk, insbesondere einer Datenwolke (im Folgenden auch "Cloud" genannt), austauschen können. Die Gründe sind vielfältig, beispielsweise sollen damit verschiedene lokale Automatisierungssysteme miteinander vernetzt werden können, eine Kontrolle des Produktionsbetriebs soll von verschiedenen Standorten weltweit aus erfolgen können, Aufträge sollen in die Automatisierungsanordnungen übermittelt werden können und Produktionsdaten ausgelesen werden können.

Um den Datenaustausch zwischen den privaten Netzwerken der Automatisierungsanordnungen und dem öffentlichen Netzwerk, insbesondere der Cloud, zu regulieren und zu kontrollieren, werden an der Grenze zwischen dem privaten und dem öffentlichen Netzwerk sogenannte Edge-Geräte oder Edge-Devices eingesetzt.

Das erfindungsgemäße Edge-Gerät umfasst einen ersten Kommunikationsanschluss zu einem ersten Netzwerk, welches ein ein öffentliches Netzwerk ist, und zumindest zwei zweite Kommunikationsanschlüssen zu einem zweiten Netzwerk, insbesondere einem privaten industriellen Netzwerk. Derartige Anschlüsse werden häufig auch als "Ports" bezeichnet.

Erfindungsgemäß umfasst das Edge-Gerät eine Anwendungs-Software, die über den ersten Kommunikationsanschluss in das Edge-Gerät ladbar ist. Das Edge-Gerät ist dabei derart ausgestaltet und eingerichtet, dass mittels der Anwendungs-Software die zweiten Kommunikationsanschlüsse (Ports) für einen redundanten Betrieb des zweiten Netzwerkes gemäß eines Redundanz-Protokolls konfigurierbar sind, und wobei die Anwendungs-Software zur Ausführung von Redundanzfunktionen des Redundanz-Protokolls ausgestaltet und eingerichtet ist.

Die Bereitstellung der Redundanzfunktionen erfolgt erfindungsgemäß rein software-basiert und dadurch unabhängig von der Hardware des Edge-Gerätes. Da die Bereitstellung der Anwendungs-Software und somit der Redundanzfunktionen über den ersten Kommunikationsanschluss erfolgt, kann dies auch nachträglich zur eigentlichen Herstellung des Edge-Gerätes erfolgen. Insgesamt können hierdurch die Redundanzfunktionen schnell und aufwandsarm bereitgestellt, geändert oder nachgerüstet werden. Vorteilhaft können so auch Edge-Geräte ohne jeglichen Bezug zum zweiten Netzwerk die Redundanzfunktionen erhalten und so für einen Redundanzbetrieb des zweiten Netzwerks eingesetzt werden.

Das Edge-Gerät kann dabei in seiner Hauptfunktion zum Beispiel ein Gateway zu einer Cloud, ein Switch, eine I/O-Station oder eine speicherprogrammierbare Steuerung (PLC) realisieren. Bei entsprechender datentechnischer Leistungsfähigkeit des Edge-Gerätes können darin auch Anwendungen und Prozesse ablaufen, die beispielsweise auf speicherprogrammierbaren Steuerungen nicht ablaufen können. Das sind beispielsweise komplexe Berechnungen, Auswertungen von Produktionsdaten, Archivierungsaufgaben und dergleichen.

Das Edge-Gerät ist hierzu erfindungsgemäß ausgestaltet und eingerichtet, über den ersten Kommunikationsanschluss die Anwendungs-Software zu empfangen und nach deren Empfang zur Ausführung zu bringen.

Von besonderem Vorteil ist, wenn für die Ausführung der Redundanzfunktionen neben der genannten Anwendungs-Software keine weiteren Software-Komponenten in das Edge-Gerät geladen werden müssen, d.h. z.B. keine Betriebssystem-Software, Treiber, IP-Stack oder ähnliches. Dis ist beispielsweise unterschiedlich zu Firmware, die üblicherweise derartige weiteren Software-Komponenten umfasst.

Das Edge-Gerät kann hierzu auch eine spezielle Installations-Software aufweisen, die ein Abspeichern der Anwendungs-Software in einem Speicher des Edge-Gerätes und eine etwaig notwendige Konfiguration der Anwendungs-Software realisiert.

Eine Konfiguration der zweiten Kommunikationsanschlüsse (Ports) ist beispielsweise notwendig, um
- die zweiten Kommunikationsanschlüsse (Ports) einem realen oder virtuellen Kommunikationsnetz zuzuordnen (z.B. eine Verschaltung bzw. Verknüpfung von zweiten Kommunikationsanschlüssen für eine Ringfunktionalität),
- je nach Rolle des Edge-Gerätes in dem Redundanz-Protokoll bei einem zweiten Kommunikationsanschluss (Port) eine Blockierfunktion für Datagramme (z.B. im Fall eines MRP-Masters) oder eine Weiterleitungsfunktion für Datagramme (z.B. im Fall eines MRP-Clients) zu aktivieren,
- eine Überwachung des Verbindungsstatus von zweiten Kommunikationsanschlüssen (Ports), wie z.B. ein Link Up Monitoring oder ein Link Down Monitoring, zu aktivieren oder zu deaktivieren,
- grundsätzlich einen zweiten Kommunikationsanschluss einzuschalten oder auszuschalten (z.B. ein "Link active" aktivieren oder deaktivieren).

Das Edge-Gerät kann hierzu eine Speichereinheit zur nichtflüchtigen Speicherung eines Programm-Codes der Anwendungs-Software, einen Prozessor zur Verarbeitung des Programm-Codes und einen Arbeitsspeicher, in den der Programm-Code zu dessen Ausführung ladbar ist, umfassen. Mittels der Speichereinheit, des Arbeitsspeichers, des Prozessors und eines in dem Edge-Gerät installierten Betriebssystems kann dann auch eine Ablaufsteuerungsumgebung für die Anwendungs-Software ausgeführt werden.

Die zweiten Kommunikationsanschlüsse (Ports) sind vorzugsweise an einen Datenbus, der insbesondere als Backplane Switch ausgebildet ist, angeschlossen, wobei der Datenbus derart ausgebildet ist, dass eine Verschaltung der zweiten Kommunikationsanschlüsse (Ports) an dem Datenbus mittels der Anwendungs-Software konfigurierbar ist.

Beispielsweise kann das Edge-Gerät bzw. der Datenbus ein oder mehrere Register (d.h. Datenspeicher) aufweisen, die die Verschaltung (bzw. Verknüpfung) von zweiten Kommunikationsanschlüssen (Ports) definieren, und die Anwendungs-Software hat Schreibe-Zugriff auf diese Register, um die Verschaltung der zweiten Kommunikationsanschlüsse (Ports) zu definieren.

Grundsätzlich kann die Erfindung für eine Vielzahl von Redundanz-Protokollen für hochverfügbare, redundant betreibbare industrielle Kommunikationsnetze verwendet werden.

Gemäß einer vorteilhaften Ausgestaltung ist das Redundanz-Protokoll das Media Redundancy Protokoll (MRP) gemäß IEC 62439-2.

Die Anwendungs-Software kann dann vorteilhaft derart ausgestaltet und eingerichtet sein, dass durch sie, insbesondere wahlweise, eine Funktion eines Ring-Redundanz-Managers oder eine Funktion eines Ring-Redundanz-Clients ausführbar ist. Es kann somit flexibel ein Edge-Gerät zu einem Ring-Redundanz-Manager oder Ring-Redundanz-Client gemäß MRP-Protokoll nachgerüstet werden. Von Vorteil ist durch die Anwendungs-Software sowohl eine Funktion eines Ring-Redundanz-Manager als auch eine Funktion eines Ring-Redundanz-Client ausführbar und die Anwendungs-Software stellt eine Benutzerschnittstelle zur Auswahl einer der beiden Funktionen zu deren Ausführung bereit.

Gemäß einer weiteren vorteilhaften Ausgestaltung ist das Redundanz-Protokoll das High-availability Seamless Redundancy Protocol (HSR) oder das Parallel Redundancy Protocol (PRP) gemäß IEC 62439-3.

Die Anwendungs-Software kann dann vorteilhaft derart ausgestaltet und eingerichtet sein, dass durch sie, insbesondere wahlweise, eine Funktion eines Double Attached Node (DAN), einer Redbox oder einer Quadbox gemäß IEC 62439-3ausführbar ist.

Es kann somit flexibel ein Edge-Gerät zu einem Double Attached Node (DAN), einer Redbox oder einer Quadbox gemäß HSR- oder PRP-Protokoll nachgerüstet werden. Von Vorteil ist durch die Anwendungs-Software sowohl eine Funktion eines Double Attached Node (DAN), einer Redbox und einer Quadbox ausführbar und die Anwendungs-Software stellt eine Benutzerschnittstelle zur Auswahl einer der drei Funktionen zu deren Ausführung bereit.

Erfindungsgemäß stellt die Anwendungs-Software eine Benutzerschnittstelle für eine logische Zuordnung von zweiten Kommunikationsanschlüssen (Ports) bereit, d.h. um ausgewählte zweite Kommunikationsanschlüsse (Ports) exklusiv zu allokieren und zur Weiterleitung von Datagrammen geschaltet miteinander zu verknüpfen. Die Benutzerschnittstelle kann dabei auch Möglichkeiten für eine Auswahl von Redundanzfunktionen bzw. deren Parametrierung bereitstellen.

Um Fehlfunktionen von vorneherein zu vermeiden, stellt die Anwendungs-Software erfindungsgemäß eine Prüffunktion bereit, die das Edge-Gerät auf eine Eignung zur Ausführung der Redundanzfunktionen des Redundanz-Protokolls prüft. Diese Prüffunktion kann beispielsweise bei einem Initialisierungsvorgang der Anwendungs-Software zur Ausführung kommen. Mit der Prüffunktion kann eine Abfrage der Hardware des Edge-Gerätes über die Anzahl der verfügbaren zweiten Kommunikationsanschlüsse (Ports) des Edge-Gerätes erfolgen. Sind beispielsweise nicht mindestens zwei zweite Kommunikationsanschlüsse (Ports) verfügbar, so ist das Edge-Gerät nicht zur Ausführung der Redundanzfunktionen geeignet. Eine derartige Abfrage kann durch die Anwendungs-Software beispielsweise durch Auslesen von Registern der Hardware des Edge-Gerätes (beispielsweise eines Datenbusses, an den die zweiten Kommunikationsanschlüsse angeschlossen sind) erfolgen.

Gemäß einer weiteren vorteilhaften Ausgestaltung umfasst das Edge-Gerät eine Ablaufsteuerungsumgebung, die dafür ausgestaltet und eingerichtet ist, auf einem Host-Betriebssystem abzulaufen, das im Edge-Gerät installiert ist, wobei die Anwendungs-Software in die Ablaufsteuerungsumgebung zur dortigen Ausführung ladbar ist und wobei die Ablaufsteuerungsumgebung eine Schnittstelle zum Zugriff auf die zweiten Kommunikationsanschlüsse (Ports) aufweist.

Die Anwendungs-Software kann dann einen oder mehrere Software-Container umfassen, die dafür ausgestaltet und eingerichtet sind, von anderen Software-Containern oder Container-Gruppen isoliert innerhalb der Ablaufsteuerungsumgebung auf dem Host-Betriebssystem abzulaufen.

In der Ablaufsteuerungsumgebung oder in weiteren Ablaufsteuerungsumgebungen kann dann isoliert und unabhängig voneinander verschiedene Anwendungs-Software zur Ausführung gebracht werden, um unterschiedliche Funktionalitäten des Edge-Gerätes zur realisieren.

Grundsätzlich können für die Anwendungs-Software auch alternative Micro-Virtualisierungskonzepte, wie Snaps, verwendet werden. Dementsprechend kann die Ablaufsteuerungsumgebung eine Docker Engine oder einen Snap Core umfassen, die bzw. der im Edge-Gerät abläuft.

Von Vorteil umfasst die Ablaufsteuerungsumgebung eine Softwarekomponente, die - im Sinne eines Adapters zwischen der Anwendungs-Software und der Hardware - direkt auf die zweiten Anschlüsse (Ports) zugreift und zur Ausführung der Redundanzfunktionen erforderliche Hardware-Ressourcen (Pufferspeicher, Interruptleitung zur CPU, etc.) des Edge-Gerätes bereitstellt. Hierdurch kann ein gutes Zusammenwirken der Anwendungs-Software und der Hardware des Edge-Gerätes sichergestellt werden.

Diese (Adapter-)Softwarekomponente ist von Vorteil ausgestaltet und eingerichtet, entsprechend der von der Anwendungs-Software vorgegebenen Redundanzfunktionen über die zweiten Anschlüsse (Ports) empfangene Datagramme zu filtern und auszuwerten. Hierdurch kann diese (Adapter-)Softwarekomponente beispielsweise in der Funktion des Edge-Gerätes als ein MRP-Redundanz-Manager sicherstellen, dass der Ring in Ordnung ist, und im Fehlerfall eine Ringumschaltung durchführen.

Weiterhin umfasst die Erfindung ein Verfahren zur Bereitstellung von Redundanzfunktionen gemäß eines industriellen Redundanzprotokolls auf einem Edge-Gerät umfassend
- einen ersten Kommunikationsanschluss zu einem ersten Netzwerk, welches ein öffentliches Netzwerk ist,
- zumindest zwei zweiten Kommunikationsanschlüssen zu einem zweiten Netzwerk, insbesondere einem privaten industriellen Netzwerk,
wobei das Verfahren die folgenden Schritte umfasst:
a) Laden einer Anwendungs-Software über den ersten Kommunikationsanschluss auf das Edge-Gerät,
b) Konfigurieren der zweiten Kommunikationsanschlüsse mittels der Anwendungs-Software für einen redundanten Betrieb des zweiten Netzwerkes gemäß eines Redundanz-Protokolls
c) Ausführen von Redundanzfunktionen des Redundanz-Protokolls durch die Anwendungs-Software.

Erfindungsgemäß umfasst der Schritt b) die folgenden Schritte:
- Prüfen einer Hardware des Edge-Gerätes auf eine Eignung zur Ausführung der Redundanzfunktionen durch die Anwendungs-Software, insbesondere auf das Vorhandensein einer benötigten Anzahl von zweiten Kommunikationsanschlüssen,
- bei nicht erfolgreicher Prüfung: Beendigen des Verfahrens,
- bei erfolgreicher Prüfung: Weiterführen des Verfahrens mit folgenden Schritten:
   - Auffordern zur Bereitstellung von Angaben zur Konfiguration der zweiten Kommunikationsanschlüsse, insbesondere zu deren (logischer) Verschaltung, und/oder zur Auswahl von Redundanzfunktionen,
   - Erfassen von Angaben zur Konfiguration der zweiten Konfigurationsanschlüsse, insbesondere zu deren (logischer) Verschaltung, und/oder zur Auswahl von Redundanzfunktionen,
   - Konfigurieren der zweiten Kommunikationsanschlüsse, insbesondere (logisches) miteinander Verschalten der zweiten Anschlüsse, und/oder Einstellen der ausgewählten Redundanzfunktionen in der Anwendungs-Software, insbesondere in Abhängigkeit der erfassten Angaben zur Konfiguration,
   - physikalisches Anschließen des zweiten Netzwerkes an die zweiten Kommunikationsanschlüsse.

Eine erfindungsgemäße Anwendungs-Software ist derart ausgestaltet und eingerichtet, dass sie bei einem vorstehend beschriebenen Edge-Gerät über den ersten Kommunikationsanschluss in das Edge-Gerät ladbar und darin zur Ausführung bringbar ist, wobei sie Befehle umfasst, die bewirken, dass das Edge-Gerät die Schritte b) und c) des vorstehend beschriebenen Verfahrens ausführt.

Die Anwendungs-Software muss beispielsweise hinsichtlich der Datenmenge bzw. Dateigröße derart bemessen sein, dass sie von einem Edge-Gerät über dessen ersten Kommunikationsanschluss empfangbar und in einem Speicher des Edge-Gerätes abspeicherbar ist. Weiterhin muss sie beispielsweise derart ausgestaltet und eingerichtet sein, dass sie auf einem Betriebssystem oder einer Ausführungsumgebung des Edge-Gerätes ausführbar ist. Wenn als Ausführungsumgebung beispielsweise eine Docker Engine zum Einsatz kommt, muss die Applikations-Software in Form eines Containers für diese Docker Engine vorliegen. Weiterhin muss die Anwendungs-Software beispielsweise derart ausgestaltet und eingerichtet sein, dass sie von einem Installationsprogramm des Edge-Gerätes auf dem Edge-Gerät installierbar und konfigurierbar ist.

Die Anwendungs-Software kann dabei auch ein Bestandteil eines Anwendungs-Software-Pakets (application software package) sein. Ein solches Anwendungs-Software-Paket ist im Allgemeinen ein Archiv, das heißt eine Datei, welches alle benötigten Dateien und (De-) Installations-Routinen enthält. Durch Ausführung des Archivs wird ein Installationsprogramm gestartet, welches Bestandteil eines Betriebssystems des Edge-Gerätes ist.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Dabei sind einander entsprechende Teile mit jeweils gleichen Bezugszeichen versehen. Es zeigen:
- FIG 1: ein erfindungsgemäßes Edge-Gerät,
- FIG 2: eine Einbindung des Edge-Gerätes von FIG 1 in ein redundant betriebenes Netzwerk unter Nutzung des Media Redundancy Protocols (MRP),
- FIG 3: eine Einbindung des Edge-Gerätes von FIG 1 in ein redundant betriebenes Netzwerk unter Nutzung des Highavailability Seamless Redundancy Protocols (HSR),
- FIG 4: einen Verfahrensablauf zur Bereitstellung von Redundanzfunktionen gemäß eines industriellen Redundanzprotokolls auf dem Edge-Gerät von FIG 1.

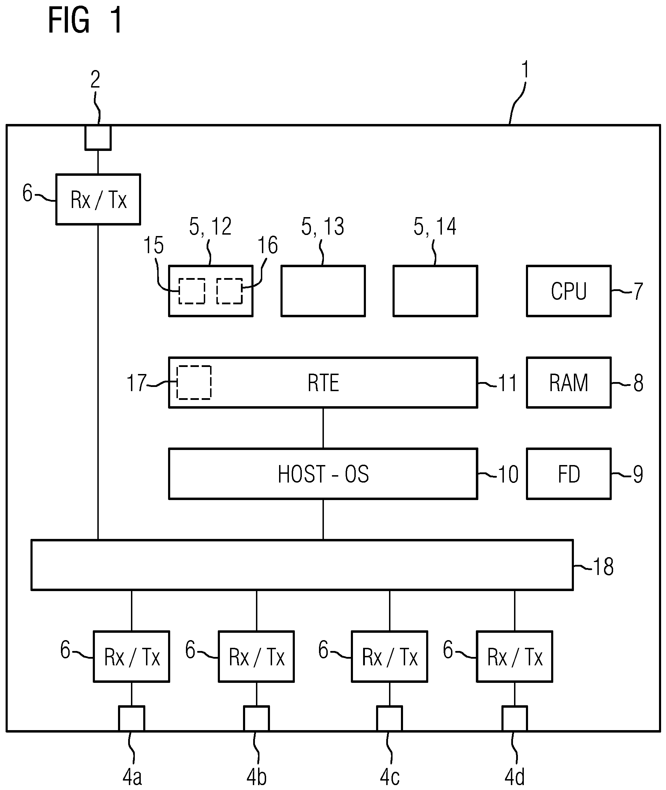

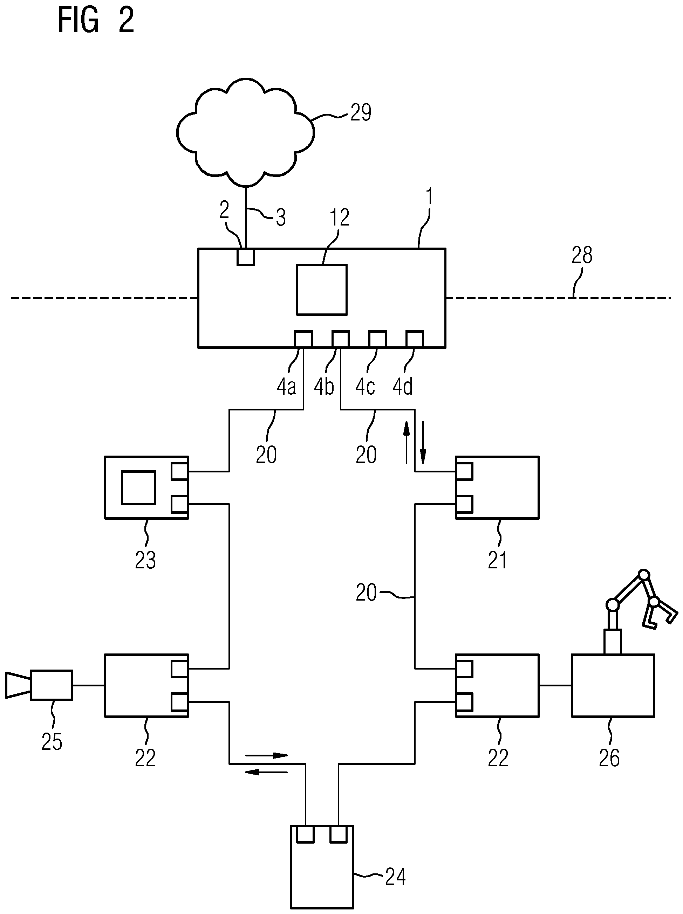

FIG 1 zeigt in vereinfachter und schematischer Darstellung ein erfindungsgemäßes Edge-Gerät 1 mit einem ersten Kommunikationsanschluss (Port) 2 zu einem ersten Netzwerk 3 (siehe FIG 2), insbesondere einem öffentlichen Netzwerk wie z.B. dem Internet, und mehreren zweiten Kommunikationsanschlüssen, hier beispielhaft vier Kommunikationsanschlüssen (Ports) 4a - 4d, zu einem zweiten Netzwerk 20 (siehe FIG 2), insbesondere einem privaten industriellen Netzwerk. Jedem der Anschlüsse 2, 4a - 4d ist jeweils eine Sende- und Empfangseinheit 6 zugeordnet.

Darüber hinaus umfasst das Edge-Gerät 1 einen Prozessor 7 zur Verarbeitung von Programm-Code, einen Arbeitsspeicher 8, in den der Programm-Code ladbar ist, sowie eine Speichereinheit 9, insbesondere eine Festplatte, einen Flash- oder SSD-Speicher, zur nichtflüchtigen Speicherung des Programm-Codes. Im Edge-Gerät 1 ist ein Host-Betriebssystem 10 installiert, auf dem mittels des Prozessors 7, des Arbeitsspeichers 8 und der Speichereinheit 9 eine Ablaufsteuerungsumgebung 11, beispielsweise eine Docker Engine, für Anwendungs-Software 12, 13, 14 in Form von Software-Containern 5 ausgeführt wird. Die Ablaufsteuerungsumgebung 11 nutzt Treiber des Host-Betriebssystems 10 zum Zugriff auf einen Datenbus 18 und auf die Sende- und Empfangseinheiten 6. Sie stellt außerdem entsprechende Schnittstellen für die Software-Container 5 der Anwendungs-Software 12, 13, 14 bereit, die in die Ablaufsteuerungsumgebung 11 zur dortigen Ausführung ladbar sind. Dabei sind die Software-Container 5 mit der Anwendungs-Software jeweils dafür konfiguriert, von anderen Software-Containern oder Container-Gruppen isoliert innerhalb der Ablaufsteuerungsumgebung 11 abzulaufen. Andererseits nutzen die Software-Container 5 jeweils gemeinsam mit anderen auf dem Edge-Gerät 1 ablaufenden Software-Containern einen Kernel des Host-Betriebssystems 10 des Edge-Geräts 1.

Eine Isolation der Software-Container 5 bzw. eine Isolation von ausgewählten Betriebssystemmitteln untereinander kann insbesondere mittels Control Groups und Namespacing realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden. Speicherabbilder für Software-Container können beispielsweise aus einem durch eine Vielzahl von Nutzern lesend bzw. schreibend zugreifbaren Speicher- und Bereitstellungssystem abgerufen werden.

Die Anwendungs-Software 12 dient dabei zur Bereitstellung von Redundanzfunktionen gemäß eines industriellen Redundanzprotokolls auf dem Edge-Gerät 1. Die Anwendungs-Software 12 ist hierzu als Container 5 für die Ablaufsteuerungsumgebung 11 (z.B. eine Docker Engine) ausgebildet und eingerichtet sowie, z.B. mittels der Anwendungs-Software 13, über den ersten Anschluss 2 in das Edge-Gerät 1 ladbar (d.h. in der Speichereinheit 9 abspeicherbar) und darin zur Ausführung bringbar.

Die Software-Anwendung 13 kann hierzu eine spezielle Installationsroutine umfassen, die ein Abspeichern der Anwendungs-Software 12 in der Speichereinheit 9 und eine etwaig notwendige Konfiguration der Anwendungs-Software 12 realisiert.

Von besonderem Vorteil ist, wenn für die Ausführung der Redundanzfunktionen neben der genannten Anwendungs-Software 12 keine weiteren Software-Komponenten in das Edge-Gerät 1 geladen werden müssen, d.h. z.B. keine Betriebssystem-Software, Treiber, IP-Stack oder ähnliches. Dies ist unterschiedlich zu Firmware, die üblicherweise derartige weiteren Software-Komponenten umfasst.

Mittels der Anwendungs-Software 12 sind die zweiten Anschlüsse (Ports) 4a - 4b für einen redundanten Betrieb des zweiten Netzwerkes 20 gemäß eines industriellen Redundanz-Protokolls konfigurierbar, und die Anwendungs-Software 12 ist zur Ausführung von Redundanzfunktionen des Redundanz-Protokolls ausgestaltet und eingerichtet.

Eine Konfiguration der zweiten Kommunikationsanschlüsse (Ports) 4a - 4d ist beispielsweise notwendig, um
- die zweiten Kommunikationsanschlüsse (Ports) 4a - 4d einem realen oder virtuellen zweiten Netzwerk zuzuordnen (z.B. eine Verschaltung bzw. Verknüpfung von zwei der zweiten Kommunikationsanschlüsse für eine Ringfunktionalität),
- je nach Rolle des Edge-Gerätes 1 in dem Redundanz-Protokoll bei einem zweiten Kommunikationsanschluss (Port) eine Blockierfunktion für Datagramme (z.B. im Fall eines MRP-Masters) oder eine Weiterleitungsfunktion für Datagramme (z.B. im Fall eines MRP-Clients) zu aktivieren,
- eine Überwachung des Verbindungsstatus von zweiten Kommunikationsanschlüssen (Ports) 4a- 4d, wie z.B. ein Link Up Monitoring oder ein Link Down Monitoring, zu aktivieren oder zu deaktivieren,
- grundsätzlich einen zweiten Kommunikationsanschluss 4a - 4d einzuschalten oder auszuschalten (z.B. ein "Link active" aktivieren oder deaktivieren).

Bei dem Redundanz-Protokoll kann es sich beispielsweise um das Media Redundancy Protokoll (MRP) gemäß IEC 62439-2 handeln. Die Anwendungs-Software 12 ist dann vorteilhaft derart ausgestaltet und eingerichtet, dass durch sie, insbesondere wahlweise, eine Funktion eines Ring-Redundanz-Managers oder eine Funktion eines Ring-Redundanz-Clients ausführbar ist. Es kann somit flexibel in dem Edge-Gerät 1 ein Ring-Redundanz-Managers oder Ring-Redundanz-Client gemäß MRP-Protokoll bereitgestellt bzw. nachgerüstet werden.

Gemäß einer weiteren vorteilhaften Ausgestaltung ist das Redundanz-Protokoll das High-availability Seamless Redundancy Protocol (HSR) oder das Parallel Redundancy Protocol (PRP) gemäß IEC 62439-3. Die Anwendungs-Software 12 ist dann derart ausgestaltet und eingerichtet, dass durch sie, insbesondere wahlweise, eine Funktion eines Double Attached Node (DAN), einer Redbox oder einer Quadbox ausführbar ist. Es kann somit flexibel in dem Edge-Gerät 1 ein Double Attached Node (DAN), eine Redbox oder eine Quadbox gemäß HSR- oder PRP-Protokoll bereitgestellt oder nachgerüstet werden.

Die Anwendungs-Software 12 stellt über den ersten Anschluss 2 eine Benutzerschnittstelle 15 für eine logischen Zuordnung von zweiten Anschlüssen (Ports) 4a - 4d durch einen Anwender des Edge-Geräts 1 bereit, d.h. um ausgewählte zweite Anschlüsse (Ports) 4a - 4d exklusiv zu allokieren und zur Weiterleitung von Datagrammen geschaltet miteinander zu verknüpfen. Die Benutzerschnittstelle 15 kann dabei auch Möglichkeiten für eine Auswahl von Redundanzfunktionen bzw. deren Parametrierung bereitstellen.

Der Datenbus 18, der insbesondere als Backplane Switch ausgebildet ist, ist derart ausgebildet, dass eine Verschaltung der zweiten Kommunikationsanschlüsse (Ports) 4a - 4d an dem Datenbus 18 mittels der Anwendungs-Software 12 konfigurierbar ist.

Beispielsweise kann das Edge-Gerät 1 bzw. der Datenbus 18 ein oder mehrere Register (d.h. Datenspeicher) aufweisen, die die Verschaltung (bzw. Verknüpfung) von zweiten Kommunikationsanschlüssen (Ports) definieren, und die Anwendungs-Software 12 hat Schreibe-Zugriff auf diese Register, um die Verschaltungen der zweiten Kommunikationsanschlüsse (Ports) zu definieren.

Im Fall des MRP-Protokolls ist durch die Anwendungs-Software 12 von Vorteil sowohl eine Funktion eines Ring-Redundanz-Managers als auch eine Funktion eines Ring-Redundanz-Clients ausführbar und über die Benutzerschnittstelle 15 erfolgt eine Auswahl einer der beiden Funktionen zu deren Ausführung.

Im Fall des HSR- oder PRP-Protokolls ist durch die Anwendungs-Software 12 sowohl eine Funktion eines Double Attached Node (DAN), einer Redbox und einer Quadbox ausführbar und über die Benutzerschnittstelle 15 erfolgt eine Auswahl einer der drei Funktionen zu deren Ausführung.

Um Fehlfunktionen von vorneherein zu vermeiden, stellt die Anwendungs-Software 12 von Vorteil auch eine Prüffunktion 16 bereit, die das Edge-Gerät 1 auf eine Eignung zur Ausführung von Redundanzfunktionen des gewünschten Redundanz-Protokolls prüft. Diese Prüffunktion kann beispielsweise bei einem Initialisierungsvorgang der Anwendungs-Software 12 zur Ausführung kommen. Mit der Prüffunktion erfolgt eine Abfrage der Hardware des Edge-Gerätes 1 über die Anzahl der verfügbaren zweiten Kommunikationsanschlüsse (Ports). Sind beispielsweise nicht mindestens zwei zweite Kommunikationsanschlüsse (Ports) verfügbar, so ist das Edge-Gerät 1 nicht zur Ausführung der Redundanzfunktionen geeignet. Eine derartige Abfrage kann durch die Anwendungs-Software beispielsweise durch Auslesen von Registern der Hardware des Edge-Gerätes (beispielsweise des Datenbusses 18, an den die zweiten Kommunikationsanschlüsse angeschlossen sind) erfolgen.

Die Ablaufsteuerungsumgebung 11 umfasst von Vorteil eine Softwarekomponente 17, die im Sinne eines Adapters zwischen der Anwendungs-Software 12 und der Hardware direkt auf die zweiten Anschlüsse (Ports) 4a - 4d zugreift und zur Ausführung der Redundanzfunktionen erforderliche Hardware-Ressourcen (Pufferspeicher für die Weiterleitung von Datagrammen, Zugriffszeiten, Interruptleitung zur CPU 7, etc.) des Edge-Gerätes 1 bereitstellt. Hierdurch kann ein gutes Zusammenwirken der Anwendungs-Software 12 und der Hardware des Edge-Gerätes 1 sichergestellt werden.

Die Softwarekomponente 17 ist von Vorteil ausgestaltet und eingerichtet, entsprechend der von der Anwendungs-Software 12 vorgegebenen Redundanzfunktionen über die zweiten Anschlüsse (Ports) 4a - 4d empfangene Datagramme zu filtern und auszuwerten. Hierdurch kann sie beispielsweise in der Funktion des Edge-Geräts 1 als ein MRP-Redundanz-Manager sicherstellen, dass der Ring in Ordnung ist, und im Fehlerfall eine Ringumschaltung durchführen.

Andere Anwendungs-Software wie zum Beispiel die Anwendungs-Software 14 kann Dienste bzw. Funktionen eines industriellen Automatisierungssystems bereitstellen, wie z.B. Steuerungsaufgaben, Datenerfassungs-/Datenausgabe-Aufgaben, komplexe Berechnungen, Auswertungen von Produktionsdaten, Archivierungsaufgaben, oder dem gesicherten Datenaustausch über das öffentliche Netzwerk 3 mit einer Cloud oder anderen Automatisierungssystemen dienen.

FIG 2 zeigt beispielhaft eine Einbindung des Edge-Gerätes 1 von FIG 1 in ein redundant betriebenes PROFINET-Netzwerk 20 unter Nutzung des Media Redundancy Protocols (MRP). Das ringförmige Netzwerk 20 ist dabei an die Ports 4a und 4b des Edge-Gerätes 1 angeschlossen. An das Netzwerk 20 sind eine Vielzahl von Kommunikations- bzw. Automatisierungsgeräten angeschlossen. Dies können beispielsweise PROFINET-fähige Switches 21 oder Automatisierungsgeräte mit integrierten PROFINET-Schnittstellen wie zum Beispiel speicherprogrammierbare Steuerungen (PLC) 22, Bedien- und Beobachtungsstationen 23 oder I/O-Stationen 24 sein. Im Fall von FIG 2 dienen die speicherprogrammierbaren Steuerungen (PLC) 22 beispielsweise zur Steuerung von Vorrichtungen 25 oder Maschinen 26. Eine I/O-Station 24 dient zur Erfassung von Messwerten und zur Ausgabe von Steuergrößen von bzw. an die Vorrichtungen und Maschinen. Eine Bedien- und Beobachtungsstation 23 dient zur Visualisierung von Prozessdaten bzw. Mess- und Steuergrößen.

Ein Teilnehmer an dem Netzwerk 20 muss dabei die Rolle des Ring-Redundanz-Managers gemäß MRP-Protokoll übernehmen, während alle anderen Teilnehmer die Rolle eines Ring-Redundanz-Clients besitzen. Das Edge-Gerät 1 kann hierbei nun flexibel entweder die Rolle des Ring-Redundanz-Managers oder die Rolle eines Ring-Redundanz-Clients übernehmen.

Der Kommunikationsanschluss 2 ist mit einem öffentlichen Netzwerk 3, wie zum Beispiel dem Internet, verbunden und kommuniziert mit einem nicht näher dargestellten Cloud-Server in der Cloud 29. Bei dem PROFINET-Netzwerk 20 handelt es sich dagegen um ein anlageninternes, privates Netzwerk. Das Edge-Gerät 1 befindet sich somit an der Grenze zwischen einem öffentlichen Bereich und einem privaten Bereich, was durch die gestrichelte Trennlinie 28 symbolisiert wird.

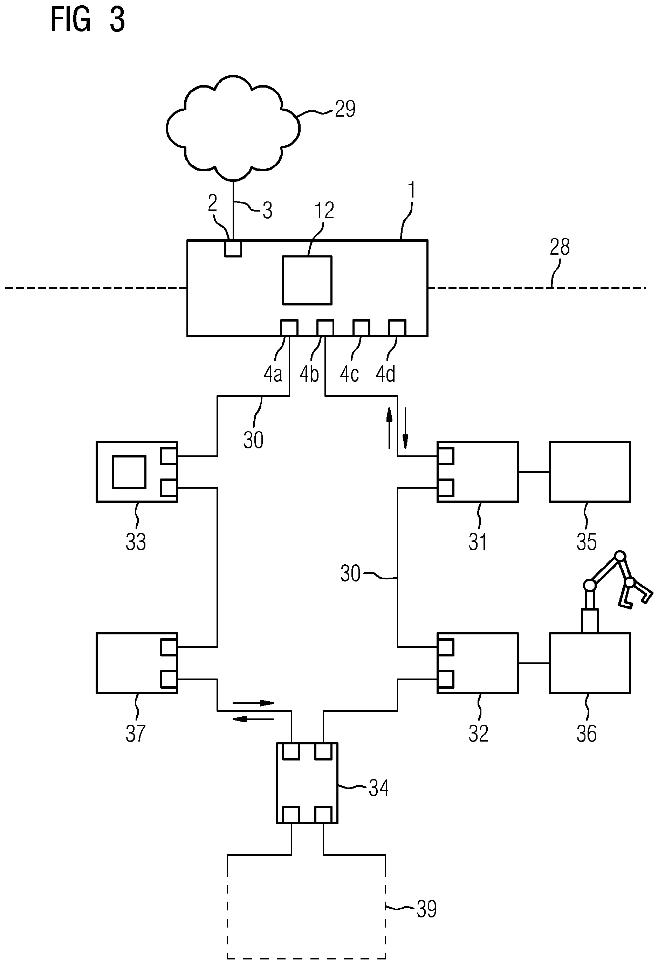

FIG 3 zeigt beispielhaft eine Einbindung des Edge-Gerätes 1 von FIG 1 in ein redundant betriebenes Industrial Ethernet-Netzwerk 30 unter Nutzung des High-availability Seamless Redundancy Protokolls (HSR). Auch hier liegt ein ringförmiges Netzwerk 30 vor, das an die Ports 4a und 4b des Edge-Gerätes 1 angeschlossen ist. An das Netzwerk 30 sind eine Vielzahl von Kommunikations- bzw. Automatisierungsgeräten angeschlossen. Diese werden gemäß IEC 62439-3 unterteilt in Double Attached Nodes (DAN), Redboxes oder Quadboxes.

Im Fall von FIG 3 ist mit dem Bezugszeichen 31 eine Redbox bezeichnet, über die ein nicht HSR-fähiges Gerät, hier beispielsweise ein Schutzgerät 35, an das Netzwerk 30 angebunden ist. Eine speicherprogrammierbare Steuerung (PLC) 32 zur Steuerung einer Maschine 36 ist HSR-fähig und deshalb als "Double Attached Node implementing HSR" (DANH) an das Netzwerk 30 angeschlossen. Mit dem Bezugszeichen 34 ist eine Quadbox bezeichnet, die das HSR-Netzwerk 30 mit einem weiteren HSR-Netzwerk 39 verbindet und Datenverkehr auf den Netzwerken filtert und an das jeweils andere Netzwerk weiterleitet. Eine Bedien- und Beobachtungsstationen 33 und eine I/O-Station 37 sind HSR-fähig und deshalb als "Double Attached Node implementing HSR" (DANH) an das Netzwerk 30 angeschlossen.

Zukünftig wird in derartigen Netzwerken verstärkt auch Time-Sensitive Networking (TSN) gemäß IEEE 802.1Q, IEEE 802.1AB, IEEE 802.1AS, IEEE 802.1BA bzw. IEEE 802.1CB zum Einsatz kommen.

Die Anwendungs-Software 12 ist vorteilhaft derart ausgestaltet und eingerichtet, dass durch sie, insbesondere wahlweise, eine Funktion eines Double Attached Node implementing HSR (DANH), einer Redbox oder einer Quadbox ausführbar ist, und die Anwendungs-Software 12 stellt über die Benutzerschnittstelle 15 die Möglichkeit zur Auswahl einer der drei Funktionen zu deren Ausführung bereit.

Es kann somit flexibel in dem Edge-Gerät 1 ein Double Attached Node (DANH), eine Redbox oder eine Quadbox gemäß des HSR-Protokolls bereitgestellt oder nachgerüstet werden und dabei HSR-Duplikate-Filterfunktionen ausführen.

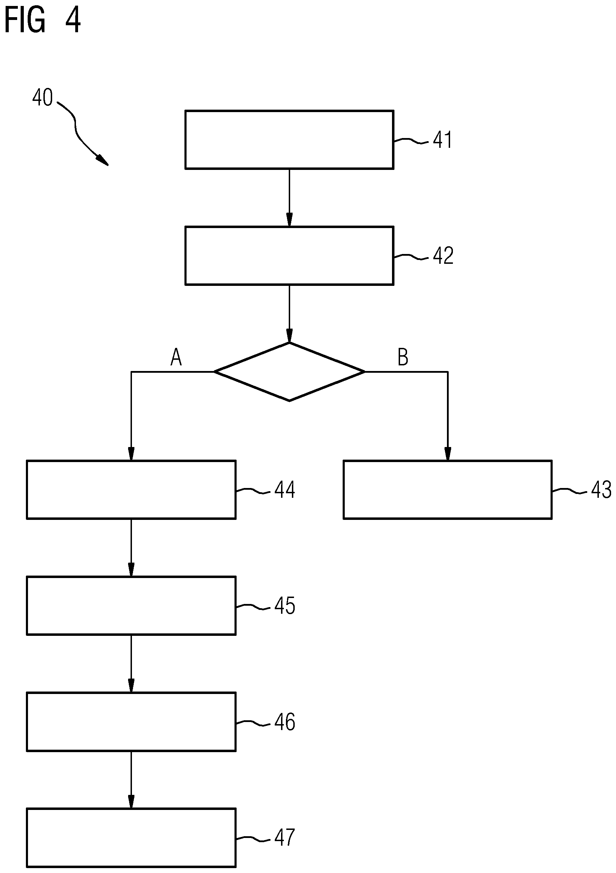

FIG 4 veranschaulicht einen erfindungsgemäßen Verfahrensablauf 40 zur Bereitstellung von Redundanzfunktionen gemäß eines industriellen Redundanzprotokolls auf dem Edge-Gerät 1 von FIG 1.

In einem ersten Schritt 41 wird von einem Benutzer mittels der Anwendungs-Software 13 und einer von dieser bereitgestellten Benutzeroberfläche über das öffentliche Netzwerk 3 und den Anschluss 2 die Anwendungs-Software 12 auf das Edge-Gerät 1 geladen, darin abgespeichert und zur Ausführung gebracht.

In einem zweiten Schritt 42 prüft nun die Anwendungs-Software 12 die Hardware des Edge-Gerätes 1 auf eine Eignung zur Ausführung der Redundanzfunktionen, insbesondere auf das Vorhandensein einer benötigten Anzahl von zweiten Anschlüssen (Ports) 4a-4d, d.h. mindestens zwei Anschlüssen (Ports). Die Prüfung erfolgt hierbei unter Nutzung der Softwarekomponente 17 der Ablaufsteuerungsumgebung 11.

Eine derartige Abfrage kann durch die Anwendungs-Software 12 beispielsweise durch Auslesen von Registern der Hardware des Edge-Gerätes 1 (beispielsweise des Datenbusses 18) erfolgen.

Bei nicht erfolgreicher Prüfung, z.B. wenn keine zwei Anschlüsse (Ports) vorhanden sind, wird das Verfahren von der Anwendungs-Software 12 in einem Schritt 43 mit einer Fehlermeldung beendet (siehe Pfad B).

Bei erfolgreicher Prüfung (siehe Pfad A) wird in einem weiteren Schritt 44 ein Anwender von der Anwendungs-Software 12 mittels der Benutzerschnittstelle 15 nach Angaben zur Konfiguration der zweiten Anschlüsse (Ports), insbesondere einer Auswahl von zweiten Anschlüssen (Ports) und deren logischer Verschaltung, und zur Auswahl von Redundanzfunktionen aufgefordert (im Fall des MRP-Protokolls beispielsweise, ob das Edge-Gerät 1 die Rolle eines Ring-Redundanz-Managers oder Ring-Redundanz-Clients ausführen soll).

Diese Angaben werden von der Anwendungs-Software 12 in einem Schritt 45 erfasst und daraufhin in einem Schritt 46 die ausgewählten zweiten Anschlüsse (Ports) logisch miteinander verschaltet. Außerdem werden die ausgewählten Redundanzfunktionen in der Anwendungs-Software 12 eingestellt bzw. konfiguriert.

Beispielsweise kann das Edge-Gerät 1 bzw. der Datenbus 18 ein oder mehrere Register (d.h. Datenspeicher) aufweisen, die die Verschaltung (bzw. Verknüpfung) der zweiten Kommunikationsanschlüssen (Ports) definieren, und die Anwendungs-Software 12 hat Schreibe-Zugriff auf diese Register, um die Verschaltungen der zweiten Kommunikationsanschlüsse (Ports) zu definieren.

In einem letzten Schritt 47 kann dann das Netzwerk 20 bzw. 30 an die ausgewählten und logisch miteinander verschalteten zweiten Anschlüsse (Ports) physikalisch angeschlossen werden.

## Patentansprüche

1. Edge-Gerät (1) umfassend
- einen ersten Kommunikationsanschluss (2) zu einem ersten Netzwerk (3), welches ein öffentliches Netzwerk ist,
- zumindest zwei zweite Kommunikationsanschlüsse (4a, 4b, 4c, 4d) zu einem zweiten Netzwerk (20, 30), und
- eine Anwendungs-Software (12), die über den ersten Anschluss (2) in das Edge-Gerät (1) ladbar ist,
wobei das Edge-Gerät (1) derart ausgestaltet und eingerichtet ist, dass mittels der Anwendungs-Software (12) die zweiten Kommunikationsanschlüsse (4a, 4b, 4c, 4d) für einen redundanten Betrieb des zweiten Netzwerkes (20, 30) gemäß eines industriellen Redundanz-Protokolls konfigurierbar sind, und wobei die Anwendungs-Software (12) zur Ausführung von Redundanzfunktionen des Redundanz-Protokolls ausgestaltet und eingerichtet ist, **dadurch gekennzeichnet, dass**
- das Edge-Gerät (1) ausgestaltet und eingerichtet ist, die Anwendungs-Software (12) über den ersten Kommunikationsanschluss (2) zu empfangen und nach deren Empfang zur Ausführung zu bringen,
- wobei die Bereitstellung der Redundanzfunktionen rein software-basiert und dadurch unabhängig von der Hardware des Edge-Gerätes erfolgt,
- wobei die Anwendungs-Software (12) eine Prüffunktion (16) bereitstellt, die das Edge-Gerät (1) auf eine Eignung zur Ausführung der Redundanzfunktionen des Redundanz-Protokolls prüft und
- wobei die Anwendungs-Software (12) eine Benutzerschnittstelle (15) für eine logische Zuordnung der zweiten Kommunikationsanschlüsse (4a, 4b, 4c, 4d) bereitstellt.

2. Edge-Gerät (1) nach Anspruch 1, umfassend einen Datenbus (18), der als Backplane Switch ausgebildet ist, wobei die zweiten Kommunikationsanschlüsse (4a, 4b, 4c, 4d) an den Datenbus (18) angeschlossen sind, wobei der Datenbus (18) derart ausgebildet ist, dass eine Verschaltung der zweiten Kommunikationsanschlüsse (4a, 4b, 4c, 4d) an dem Datenbus (18) mittels der Anwendungs-Software (12) konfigurierbar ist.

3. Edge-Gerät (1) nach einem der Ansprüche 1 bis 2, wobei das Redundanz-Protokoll das Media Redundancy Protokoll (MRP) gemäß IEC 62439-2 ist.

4. Edge-Gerät (1) nach Anspruch 3, wobei die Anwendungs-Software (12) derart ausgestaltet und eingerichtet ist, dass durch sie eine Funktion eines Ring-Redundanz-Managers oder eine Funktion eines Ring-Redundanz-Clients gemäß IEC 62439-2 ausführbar ist.

5. Edge-Gerät (1) nach einem der Ansprüche 1 bis 2, wobei das Redundanz-Protokoll das High-availability Seamless Redundancy Protocol (HSR) oder das Parallel Redundancy Protocol (PRP) gemäß IEC 62439-3 ist.

6. Edge-Gerät (1) nach Anspruch 5, wobei die Anwendungs-Software (12) derart ausgestaltet und eingerichtet ist, dass durch sie eine Funktion eines Double Attached Node (DAN), einer Redbox oder einer Quadbox gemäß IEC 62439-3 ausführbar ist.

7. Edge-Gerät (1) nach einem der vorhergehenden Ansprüche, wobei die Anwendungs-Software (12) die Benutzerschnittstelle (15) für eine Auswahl von Redundanzfunktionen bereitstellt.

8. Edge-Gerät (1) nach einem der vorhergehenden Ansprüche, umfassend eine Ablaufsteuerungsumgebung (11), die dafür ausgestaltet und eingerichtet ist, auf einem Host-Betriebssystem (10) abzulaufen, das in dem Edge-Gerät (1) installiert ist, wobei die Anwendungs-Software (12) in die Ablaufsteuerungsumgebung (11) zur dortigen Ausführung ladbar ist und wobei die Ablaufsteuerungsumgebung (11) eine Schnittstelle zum Zugriff auf die zweiten Kommunikationsanschlüsse (4a, 4b, 4c, 4d) aufweist.

9. Edge-Gerät (1) nach Anspruch 8, wobei die Anwendungs-Software (12) ein oder mehrere Software-Container umfasst, die dafür ausgestaltet und eingerichtet sind, von anderen Software-Containern oder Container-Gruppen isoliert innerhalb der Ablaufsteuerungsumgebung (11) auf dem Host-Betriebssystem (10) abzulaufen.

10. Edge-Gerät (1) nach Anspruch 8 oder 9, wobei die Ablaufsteuerungsumgebung (11) eine Softwarekomponente (17) umfasst, die direkt auf die zweiten Kommunikationsanschlüsse (4a, 4b, 4c, 4d) zugreift und zur Ausführung der Redundanzfunktionen erforderliche Hardware-Ressourcen des Edge-Gerätes (1) bereitstellt.

11. Edge-Gerät (1) nach Anspruch 10, wobei die Softwarekomponente (17) über die zweiten Kommunikationsanschlüsse (4a, 4b, 4c, 4d) empfangene Datagramme filtert und auswertet.

12. Verfahren zur Bereitstellung von Redundanzfunktionen gemäß eines industriellen Redundanzprotokolls auf einem Edge-Gerät (1) umfassend
- einen ersten Kommunikationsanschluss (2) zu einem ersten Netzwerk (3), welches ein öffentliches Netzwerk ist,
- zumindest zwei zweite Kommunikationsanschlüsse (4a, 4b, 4c, 4d) zu einem zweiten Netzwerk (20, 30)
wobei das Verfahren die folgenden Schritte umfasst:
a) Laden einer Anwendungs-Software (12) über den ersten Kommunikationsanschluss (2) auf das Edge-Gerät (1),
b) Konfigurieren der zweiten Kommunikationsanschlüsse (4a, 4b, 4c, 4d) mittels der Anwendungs-Software (12) für einen redundanten Betrieb des zweiten Netzwerkes (20, 30) gemäß eines Redundanz-Protokolls,
c) Ausführen von Redundanzfunktionen des Redundanz-Protokolls durch die Anwendungs-Software (12),
wobei die Bereitstellung der Redundanzfunktionen rein software-basiert und dadurch unabhängig von der Hardware des Edge-Gerätes erfolgt, und
wobei der Schritt b) die folgenden Schritte umfasst:
- Prüfen einer Hardware des Edge-Gerätes (1) auf eine Eignung zur Ausführung der Redundanzfunktionen durch die Anwendungs-Software (12),
- bei nicht erfolgreicher Prüfung: Beendigen des Verfahrens,
- bei erfolgreicher Prüfung: Weiterführen des Verfahrens mit folgenden Schritten:
- Auffordern zur Bereitstellung von Angaben zur Konfiguration der zweiten Kommunikationsanschlüsse (4a, 4b, 4c, 4d), wobei die Anwendungs-Software (12) eine Benutzerschnittstelle (15) für eine logische Zuordnung der zweiten Kommunikationsanschlüsse (4a, 4b, 4c, 4d) bereitstellt,
- Erfassen von Angaben zur Konfiguration der zweiten Konfigurationsanschlüsse (4a, 4b, 4c, 4d),
- Konfigurieren der zweiten Kommunikationsanschlüsse (4a, 4b, 4c, 4d),
- physikalisches Anschließen des zweiten Netzwerkes (20, 30) an die zweiten Kommunikationsanschlüsse (4a, 4b, 4c, 4d) .

13. Anwendungs-Software (12), die derart ausgestaltet und eingerichtet ist, dass sie bei einem Edge-Gerät (1) nach einem der Ansprüche 1 bis 11 über den ersten Kommunikationsanschluss (2) in das Edge-Gerät (1) ladbar und darin zur Ausführung bringbar ist, wobei sie Befehle umfasst, die bewirken, dass das Edge-Gerät (1) die Schritte b) und c) des Verfahrens nach Anspruch 12 ausführt.

## Claims

1. Edge device (1) comprising
- a first communication port (2) to a first network (3), which is a public network,
- at least two second communication ports (4a, 4b, 4c, 4d) to a second network (20, 30), and
- application software (12) that can be loaded into the edge device (1) via the first port (2),
wherein the edge device (1) is designed and set up such that, by means of the application software (12), the second communication ports (4a, 4b, 4c, 4d) can be configured for redundant operation of the second network (20, 30) in accordance with an industrial redundancy protocol, and wherein the application software (12) is designed and set up to perform redundancy functions of the redundancy protocol, **characterised in that**
- the edge device (1) is designed and set up to receive the application software (12) via the first communication port (2) and to execute it upon receipt thereof,
- wherein the provision of the redundancy functions is purely software-based and therefore independent of the hardware of the edge device,
- wherein the application software (12) provides a test function (16) that checks the edge device (1) for suitability to perform the redundancy functions of the redundancy protocol and
- wherein the application software (12) provides a user interface (15) for logical assignment of second communication ports (4a, 4b, 4c, 4d).

2. Edge device (1) according to claim 1, comprising a data bus (18) which is designed as a backplane switch, wherein the second communication ports (4a, 4b, 4c, 4d) are connected to the data bus (18), wherein the data bus (18) is designed such that an interconnection of the second communication ports (4a, 4b, 4c, 4d) on the data bus (18) can be configured by means of the application software (12).

3. Edge device (1) according to one of claims 1 to 2, wherein the redundancy protocol is the Media Redundancy Protocol (MRP) per IEC 62439-2.

4. Edge device (1) according to claim 3, wherein the application software (12) is designed and set up such that a ring redundancy manager function or a ring redundancy client function per IEC 62439-2 can be performed by it.

5. Edge device (1) according to one of claims 1 to 2, wherein the redundancy protocol is the High-availability Seamless Redundancy Protocol (HSR) or the Parallel Redundancy Protocol (PRP) per IEC 62439-3.

6. Edge device (1) according to claim 5, wherein the application software (12) is designed and set up such that a Double Attached Node (DAN), RedBox or QuadBox function per IEC 62439-3 can be performed by it.

7. Edge device (1) according to one of the preceding claims, wherein the application software (12) provides the user interface (15) for selecting redundancy functions.

8. Edge device (1) according to one of the preceding claims, comprising a sequential control environment (11) designed and set up to run on a host operating system (10) installed in the edge device (1), wherein the application software (12) can be loaded into the sequential control environment (11) for execution there, and wherein the sequential control environment (11) has an interface for accessing the second communication ports (4a, 4b, 4c, 4d).

9. Edge device (1) according to claim 8, wherein the application software (12) comprises one or more software containers designed and set up to run in isolation from other software containers or container groups within the sequential control environment (11) on the host operating system (10).

10. Edge device (1) according to claim 8 or 9, wherein the sequential control environment (11) comprises a software component (17) that directly accesses the second communication ports (4a, 4b, 4c, 4d) and provides hardware resources of the edge device (1) that are required to perform the redundancy functions.

11. Edge device (1) according to claim 10, wherein the software component (17) filters and evaluates datagrams received via the second communication ports (4a, 4b, 4c, 4d).

12. Method for providing redundancy functions according to an industrial redundancy protocol on an edge device (1) comprising
- a first communication port (2) connected to a first network (3), which is a public network,
- at least two second communication ports (4a, 4b, 4c, 4d) connected to a second network (20, 30),
wherein the method comprises the following steps:
a) loading of application software (12) onto the edge device (1) via the first communication port (2),
b) configuring of the second communication ports (4a, 4b, 4c, 4d) by means of the application software (12) for redundant operation of the second network (20, 30) in accordance with a redundancy protocol,
c) performance of redundancy functions of the redundancy protocol by the application software (12),
wherein the provision of the redundancy functions is purely software-based and therefore independent of the hardware of the edge device, and
wherein step b) comprises the following steps:
- checking, by means of the application software (12), that hardware of the edge device (1) is suitable to perform the redundancy functions,
- if the check is unsuccessful: terminate the method,
- if the check is successful: continue the method with the following steps:
- requesting information on the configuration of the second communication ports (4a, 4b, 4c, 4d), wherein the application software (12) provides a user interface (15) for logical assignment of second communication ports (4a, 4b, 4c, 4d),
- acquiring information on the configuration of the second configuration ports (4a, 4b, 4c, 4d),
- configuring the second communication ports (4a, 4b, 4c, 4d),
- physically connecting the second network (20, 30) to the second communication ports (4a, 4b, 4c, 4d).

13. Piece of application software (12) designed and set up such that, in the case of an edge device (1) according to one of claims 1 to 11, it can be loaded, via the first communication port (2), into the edge device (1) and can be executed there, wherein it comprises commands causing the edge device (1) to carry out steps b) and c) of the method according to claim 12.

## Revendications

1. Dispositif (1) périphérique comprenant
- un premier accès (2) de communication à un premier réseau (3), lequel est un réseau ouvert,
- au moins deux deuxièmes accès (4a, 4b, 4c, 4d) de communication à un deuxième réseau (20, 30), et
- un logiciel (12) d'application, qui peut être chargé dans le dispositif (1) périphérique en passant par le premier accès (2),
dans lequel le dispositif (1) périphérique est conformé et agencé, de manière à pouvoir, au moyen du logiciel (12) d'application, configurer les deuxièmes accès (4a, 4b, 4c, 4d) de communication pour un fonctionnement redondant du deuxième réseau (20, 30) suivant un protocole de redondance industriel, et dans lequel le logiciel (12) d'application est conformé et agencé pour l'exécution de fonctions de redondance du protocole de redondance, **caractérisé en ce que**
- le dispositif (1) périphérique est conformé et agencé pour recevoir le logiciel (12) d'application en passant par le premier accès (2) de communication et pour, après sa réception, le mettre à exécution,
- dans lequel la mise à disposition des fonctions de redondance s'effectue d'une manière purement logicielle, et ainsi indépendamment du matériel du dispositif périphérique,
- dans lequel le logiciel (12) d'application met à disposition une fonction (16) de contrôle, qui contrôle que le dispositif (1) périphérique est propre à exécuter les fonctions de redondance du protocole de redondance, et
- dans lequel le logiciel (12) d'application met à disposition une interface (15) d'utilisateur pour une association logique des deuxièmes accès (4a, 4b, 4c, 4d) de communication.

2. Dispositif (1) périphérique suivant la revendication 1, comprenant un bus (18) de données, qui est constitué sous la forme d'un backplane switch, dans lequel les deuxièmes accès (4a, 4b, 4c, 4d) de communication sont raccordés au bus (18) de données, dans lequel le bus (18) de données est constitué, de manière à pouvoir configurer une connexion des deuxièmes accès (4a, 4b, 4c, 4d) de communication au bus (18) de données au moyen du logiciel (12) d'application.

3. Dispositif (1) périphérique suivant l'une des revendications 1 à 2, dans lequel le protocole de redondance est le protocole Media Redondancy (MRP) suivant IEC 62439-2.

4. Dispositif (1) périphérique suivant la revendication 3, dans lequel le logiciel (12) d'application est conformé et agencé, de manière à pouvoir, grâce à lui, réaliser une fonction d'un gestionnaire de redondance en anneau ou une fonction d'un client de redondance en anneau suivant IEC 62439-2.

5. Dispositif (1) périphérique suivant l'une des revendications 1 à 2, dans lequel le protocole de redondance est le protocole de redondance High-availability Seamless (HSR) ou le protocole de redondance parallèle (PRP) suivant IEC 62439-3.

6. Dispositif (1) périphérique suivant la revendication 5, dans lequel le logiciel (12) d'application est conformé et agencé, de manière à pouvoir, par lui, exécuter une fonction d'un noeud doublement rattaché (DAN) d'une redbox ou d'une quadbox suivant IRC 62439-3.

7. Dispositif (1) périphérique suivant l'une des revendications précédentes, dans lequel le logiciel (12) d'application met l'interface (15) d'utilisateur à disposition pour une sélection de fonctions de redondance.

8. Dispositif (1) périphérique suivant l'une des revendications précédentes, comprenant un environnement (11) de commande de déroulement, qui est conformé et agencé pour se dérouler sur un système (10) de fonctionnement hôte, qui est installé dans le dispositif (1) périphérique, dans lequel le logiciel (12) d'application peut être chargé dans l'environnement (11) de commande de déroulement pour y être exécuté, et dans lequel l'environnement (11) de commande de déroulement a une interface d'accès aux deuxièmes accès (4a, 4b, 4c, 4d) de communication.

9. Dispositif (1) périphérique suivant la revendication 8, dans lequel le logiciel (12) d'application comprend un ou plusieurs conteneurs logiciel, qui sont conformés et agencés pour se dérouler sur le système (10) de fonctionnement hôte dans l'environnement (11) de commande de déroulement, en étant isolés d'autres conteneurs logiciel ou groupe de conteneurs.

10. Dispositif (1) périphérique suivant la revendication 8 ou 9, dans lequel l'environnement (11) de commande de déroulement comprend un composant (17) logiciel, qui accède directement aux deuxièmes accès (4a, 4b, 4c, 4d) de communication et qui met à disposition les ressources en matériel du dispositif (1) périphérique nécessaires pour l'exécution des fonctions de redondance.

11. Dispositif (1) périphérique suivant la revendication 10, dans lequel le composant (17) logiciel filtre et évalue des datagrammes reçus en passant par les deuxièmes accès (4a, 4b, 4c, 4d) de communication.

12. Procédé pour disposer de fonctions de redondance suivant un protocole de redondance industriel sur un dispositif (1) périphérique comprenant
- un premier accès (2) de communication à un premier réseau (3), lequel est un réseau ouvert,
- au moins deux deuxièmes accès (4a, 4b, 4c, 4d) de communication à un deuxième réseau (20, 30),
dans lequel le procédé comprend les stades suivants :
a) on charge un logiciel (12) d'application sur le dispositif (1) périphérique en passant par le premier accès (2) de communication,
b) on configure les deuxièmes accès (4a, 4b, 4c, 4d) de communication au moyen du logiciel (12) d'application pour un fonctionnement redondant du deuxième réseau (20, 30) suivant un protocole de redondance,
c) on exécute des fonctions de redondance du protocole de redondance par le logiciel (12) d'application,
dans lequel la mise à disposition des fonctions de redondance s'effectue d'une manière purement logicielle, et ainsi indépendamment du matériel du dispositif périphérique, et
dans lequel le stade b) comprend les stades suivants :
- contrôle que le matériel d'un dispositif (1) périphérique est propre à l'exécution des fonctions de redondance par le logiciel (12) d'application,
- si le contrôle n'est pas couronné de succès : on met fin au procédé,
- si le contrôle est couronné de succès : on continue le procédé par les stades suivants :
- invitation à donner des indications de configuration des deuxièmes accès (4a, 4b, 4c, 4d) de communication, dans lequel le logiciel (12) d'application met à disposition une interface (15) d'utilisateur pour une association logique des deuxièmes accès (4a, 4b, 4c, 4d) de communication,
- on saisit des indications de configuration des deuxièmes accès (4a, 4b, 4c, 4d) de configuration,
- on configure les deuxièmes accès (4a, 4b, 4c, 4d) de communication,
- on raccorde physiquement le deuxième réseau (20, 30) aux deuxièmes accès (4a, 4b, 4c, 4d) de communication.

13. Logiciel (12) d'application, qui est conformé et agencé, de manière à pouvoir, par un dispositif (1) périphérique suivant l'une des revendications 1 à 11, être chargé dans le dispositif (1) périphérique en passant par le premier accès (2) de communication et à pouvoir y être mis à exécution, dans lequel il comprend des instructions, qui font que le dispositif (1) périphérique exécute les stades b) et c) du procédé suivant la revendication 12.
